# EUROPÄISCHE PATENTSCHRIFT

(11) **EP 2 876 406 B1**
(45) Veröffentlichungstag und Bekanntmachung des Hinweises auf die Patenterteilung: **15.08.2018**
(21) Anmeldenummer: 14185190.7
(22) Anmeldetag: 17.09.2014
(51) Int. Cl.: G01B 5/30

(54) **Vorrichtung zur Erfassung von Verformungen eines Rotorblatts einer Windkraftanlage**
Device for detecting deformations of a rotor blade of a wind turbine
Dispositif d'enregistrement de déformations d'une pale de rotor d'une éolienne

(30) Priorität: 21.11.2013 DE 102013223780
(43) Veröffentlichungstag der Anmeldung: 27.05.2015
(73) Patentinhaber: Dr. Johannes Heidenhain GmbH, 83301 Traunreut (DE)
(72) Erfinder: Meyer, Hermann, 83458 Schneizlreuth (DE); Thaler, Josef, 83301 Traunreut (DE)

(56) Entgegenhaltungen:
- CH-A- 127 311
- CH-A- 151 371
- DE-A1- 19 847 982
- FR-A2- 2 487 503
- FR-A2- 2 665 527

## Beschreibung

### GEBIET DER TECHNIK

Die Erfindung betrifft eine Vorrichtung zur Erfassung von Verformungen eines Rotorblatts einer Windkraftanlage gemäß dem Patentanspruch 1. Rotorblätter von Windkraftanlagen sind verschiedensten Kräften ausgesetzt, die naturgemäß zu Verformungen der Rotorblätter führen und diese gegebenenfalls zu Schwingungen anregen. Schon alleine die Gewichtskraft eines umlaufenden Rotorblattes erzeugt eine periodische Verformung des betreffenden Rotorblattes. Diese Verformungen werden überlagert durch weitere Verformungen, die unter anderem aus den aerodynamischen Lasten resultieren. Beispielsweise hängen die aerodynamische Lasten vom Höhenprofil der Windgeschwindigkeit in Kombination mit Windböen oder Windturbulenzen ab. Ebenso wird bei jedem Umlauf durch den Turmvorstau eine pulsierende Kraft in das Rotorblatt eingeleitet. Das Ausmaß der Verformungen von Rotorblättern einer Windenergieanlage ist jedenfalls nur schwer voraussagbar, weshalb Anstrengungen unternommen werden, diese als Ist-Werte zu erfassen.

Im Hinblick auf die Vorhersage von Ermüdungsschäden kann es vorteilhaft sein auf Basis der gemessenen Verformungen beziehungsweise Belastungen eine Information rückschauend über eine akkumulierte Belastung des Rotorblatts zu einem gewünschten Zeitpunkt zu erzeugen. Die Verfügbarkeit von derartigen Belastungswerten ist also im Hinblick auf kurzzeitige maximale Belastungen oder zu erwartende Ermüdungsschäden von Bedeutung. Außerdem kann in Kenntnis der Ist-Verformungen beziehungsweise Ist-Lasten die Regelung der Windkraftanlage optimiert werden, beispielsweise durch Verstellung der Pitch-Winkel.

### STAND DER TECHNIK

Aus der DE 19847982 A1 ist eine Vorrichtung zur Erfassung von Schwingungen eines Rotorblattes einer Windkraftanlage bekannt, durch die mit Hilfe eines Abstandssensors als Linearelement eine Verformung des Rotorblattes festgestellt werden kann. Aus der CH 127 311 A ist eine Vorrichtung zur Erfassung von Verformungen eines Objekts bekannt, umfassend eine Winkelmesseinrichtung und einen Arm. Die Winkelmesseinrichtung weist eine erste und eine zweite Bauteilgruppe auf, wobei die erste Bauteilgruppe relativ zur zweiten Bauteilgruppe um eine Achse schwenkbar angeordnet ist. Durch die Winkelmesseinrichtung ist die relative Winkellage zwischen der ersten und der zweiten Bauteilgruppe messbar. Die zweite Bauteilgruppe weist eine Befestigungsstelle auf, die so ausgestaltet ist, dass diese mit dem Objekt verbindbar ist. Der Arm weist eine, in einem Abstand zur Befestigungsstelle der zweiten Bauteilgruppe angeordnete, Verbindungsstelle auf, die derart ausgestaltet ist, dass der Arm an dieser mit dem Objekt verbindbar ist, wobei der Abstand orthogonal zur Achse orientiert ist. Der Arm ist in radialem Abstand mechanisch mit der ersten Bauteilgruppe gekoppelt, so dass bei Veränderung des Abstands eine relative Schwenkbewegung zwischen der ersten und der zweiten Bauteilgruppe erzeugbar ist.

### ZUSAMMENFASSUNG DER ERFINDUNG

Der Erfindung liegt die Aufgabe zugrunde, eine Vorrichtung zur Erfassung von Verformungen eines Rotorblatts einer Windkraftanlage zu schaffen, welche robust ist und zuverlässig mit hoher Genauigkeit arbeitet. Ebenso wird durch die Erfindung ein Rotorblatt geschaffen, dessen Verformungen robust und zuverlässig mit hoher Genauigkeit bestimmt werden können.

Diese Aufgabe wird erfindungsgemäß durch die Vorrichtung mit den Merkmalen des Patentanspruchs 1 gelöst.

Demnach umfasst die Vorrichtung zur Erfassung von Verformungen eines Rotorblatts einer Windkraftanlage eine Winkelmesseinrichtung, welche eine erste und eine zweite Bauteilgruppe aufweist, sowie einen Arm. Die erste Bauteilgruppe der Winkelmesseinrichtung ist relativ zur zweiten Bauteilgruppe um eine Achse schwenkbar angeordnet, wobei durch die Winkelmesseinrichtung die relative Winkellage zwischen der ersten und der zweiten Bauteilgruppe messbar ist. Die zweite Bauteilgruppe der Winkelmesseinrichtung ist so ausgestaltet, dass diese mit dem Rotorblatt unverschieblich verbindbar ist. Der Arm weist eine (erste) Verbindungsstelle auf, die derart ausgestaltet ist, dass der Arm an dieser Verbindungsstelle mit dem Rotorblatt verbindbar ist. Weiterhin ist die Verbindungsstelle in einem Abstand zur Befestigungsstelle der zweiten Bauteilgruppe angeordnet, wobei der Abstand orthogonal zur Achse orientiert ist. Der Arm ist in radialem Abstand zur Achse mechanisch mit der ersten Bauteilgruppe gekoppelt, so dass bei Veränderung des Abstands zwischen Verbindungsstelle und Befestigungsstelle eine relative Schwenkbewegung zwischen der ersten und der zweiten Bauteilgruppe erzeugbar ist.

Auch wenn eine Verbindungslinie zwischen der Verbindungsstelle und der Befestigungsstelle nicht streng orthogonal zur Achse verläuft, so ist dennoch ein Abstand orthogonal zur Achse feststellbar, sofern die Verbindungslinie zwischen Verbindungsstelle und Befestigungsstelle nicht genau parallel zur Achse verläuft. Demgemäß ist unter der Formulierung, wonach der Abstand orthogonal zur Achse ist, zu verstehen, dass eine Verbindungslinie zwischen Verbindungsstelle und Befestigungsstelle eine Richtungskomponente (entsprechend dem Abstand senkrecht zur Achsrichtung) aufweist, die orthogonal zur Achse orientiert ist.

Mit Vorteil ist der Arm aus einem Material hergestellt, welches Kunststoff umfasst. Der Kunststoff kann insbesondere faserverstärkt sein, z. B. durch Glas- und / oder Kohlefasern.

In weiterer Ausgestaltung der Erfindung ist die erste Bauteilgruppe gelenkig mit dem Arm verbunden, insbesondere über ein biegeweiches Bauelement, welches als Festkörpergelenk beziehungsweise als ein einstückiges Gelenk ausgestaltet sein kann.

Weiterhin kann die (erste) Verbindungsstelle des Arms als eine Klebefläche ausgestaltet sein.

Mit Vorteil weist die Winkelmesseinrichtung ein Wälzlager oder mehrere Wälzlager zur schwenkbaren Lagerung der ersten Bauteilgruppe relativ zur zweiten Bauteilgruppe auf. Eine derartige Lagerung dient dann auch zur Führung des Arms. Alternativ kann auch ein Gleitlager oder ein Festköpergelenk zur schwenkbaren Lagerung der ersten Bauteilgruppe relativ zur zweiten Bauteilgruppe verwendet werden.

Die zweite Bauteilgruppe der Winkelmesseinrichtung weist in vorteilhafter Bauweise eine Befestigungsstelle auf, die derart ausgestaltet ist, dass diese mit der Innenseite des Rotorblattes, insbesondere im Bereich der Wurzel des Rotorblattes, unverschiebbar verbindbar ist.

Gemäß der Erfindung weist die Winkelmesseinrichtung eine Maßverkörperung und ein Element zur Abtastung der Maßverkörperung auf. Die Maßverkörperung kann ringförmig ausgestaltet sein und ist dann geometrisch betrachtet ein Hohlzylinder mit umlaufenden Mantelseiten. Die Mantelseiten können eine geringe Höhe aufweisen, so dass die Maßverkörperung als Ringscheibe ausgestaltet ist mit ringförmigen parallel zueinander ausgerichteten Stirnflächen, die auch als Grund- oder Deckflächen bezeichnet werden können. Die Winkelskalierung oder Winkelcodierung kann auf einer der Stirnflächen aufgebracht sein.

Gerade wenn die Maßverkörperung so ausgestaltet ist, dass die Mantelseiten eine vergleichsweise größere Höhe aufweist, also bei einer eher trommelförmigen Maßverkörperung, kann die Winkelskalierung auf der Mantelseite aufgebracht sein. Die Maßverkörperung kann aber auch als Maßband ausgestaltet sein, welches beispielsweise an der Mantelseite eines zylindrischen Körpers an dessen Außenseite oder an dessen Innenseite befestigt wird.

Zudem kann die Maßverkörperung so ausgestaltet sein, dass diese nur über einen begrenzten Winkelbereich eine Skalierung aufweist, sich also nicht über 360° erstreckt, sondern nur ein Winkelsegment als Messbereich aufweist. Die winkelmäßige Erstreckung der Maßverkörperung kann auf den maximalen Messbereich beziehungsweise Schwenkwinkel abgestimmt sein.

Mit Vorteil ist das Element zur Abtastung der Maßverkörperung photosensitiv beziehungsweise lichtempfindlich ausgestaltet. Demgemäß beruht also eine derartige Abtastung auf einem optischen Prinzip.

Alternativ kann die Abtastung auf einem induktiven oder magnetischen Prinzip beruhen.

Weiterhin umfasst die Erfindung ein Rotorblatt einer Windkraftanlage mit einer Vorrichtung zur Erfassung von Verformungen. Diese Vorrichtung umfasst ihrerseits eine Winkelmesseinrichtung und einen Arm. Dabei weist die Winkelmesseinrichtung eine erste und eine zweite Bauteilgruppe auf. Die erste Bauteilgruppe ist relativ zur zweiten Bauteilgruppe um eine Achse schwenkbar angeordnet, wobei durch die Winkelmesseinrichtung die relative Winkellage zwischen der ersten und der zweiten Bauteilgruppe messbar ist. Die zweite Bauteilgruppe weist eine Befestigungsstelle auf, die mit dem Rotorblatt verbunden ist. Der Arm weist seinerseits eine (erste) Verbindungsstelle auf, die mit dem Rotorblatt verbunden ist, wobei die Verbindungsstelle in einem Abstand zur Befestigungsstelle der zweiten Bauteilgruppe angeordnet ist, wobei der Abstand orthogonal zur Achse orientiert ist. Der Arm ist in radialem Abstand mechanisch mit der ersten Bauteilgruppe gekoppelt, so dass bei Veränderung des Abstands zwischen der Verbindungsstelle und der Befestigungsstelle eine relative Schwenkbewegung zwischen der ersten und der zweiten Bauteilgruppe erzeugbar ist.

In weiterer Ausgestaltung des Rotorblatts ist der Arm in Längsrichtung des Rotorblatts orientiert, wobei das Rotorblatt (zumindest im Bereich seiner Wurzel) eine zentrale sich in Längsrichtung erstreckende Längsachse aufweist. Die (Schwenk-) Achse der Winkelmesseinrichtung ist im Wesentlichen orthogonal zur Längsrichtung des Rotorblatts ausgerichtet. Dabei kann die Winkelmesseinrichtung so angeordnet sein, dass die Achse im Wesentlichen parallel zur Innenwand des Rotorblatts orientiert ist, oder so angeordnet sein, dass die Achse im Wesentlichen orthogonal zur Innenwand des Rotorblatts orientiert ist. Demnach ist der Arm in Längsrichtung des Rotorblatts orientiert und die (Schwenk-) Achse der Winkelmesseinrichtung ist relativ zur Längsachse des Rotorblatts tangential oder radial ausgerichtet.

Die tangentiale oder radiale Ausrichtung bezieht sich insbesondere auf einen Kreisbogen, dessen Mittelpunkt auf der Längsachse des Rotorblatts zu liegen kommt.

Die Winkelmesseinrichtung kann insbesondere digitale Positionssignale und / oder Signale, die durch ein- oder mehrmaliges differenzieren der Positionssignale nach der Zeit erzeugt worden sind, liefern. Die Übertragung der betreffenden Signale kann rein digital und seriell erfolgen, so dass eine vergleichsweise einfache Verarbeitung der Signale möglich ist, z. B. zur Einbindung in eine hochdynamische Regelung.

Die Winkelmesseinrichtung weist mit Vorteil eine Maßverkörperung mit einer absoluten Codierung auf, so dass durch die Winkelmesseinrichtung die relative Winkellage zwischen der ersten und der zweiten Bauteilgruppe als eine absolute Größe messbar ist (im Gegensatz zu einer inkrementalen Messung). Auf diese Weise kann zu beliebigen Zeitpunkten die absolute Verformung des Rotorblatts gemessen werden. Dies ist insbesondere zur Überprüfung von Setzungsvorgängen in der Struktur des Rotorblatts vorteilhaft. Für eine derartige Überprüfung wird das betreffende Rotorblatt außerhalb des eigentlichen Betriebs in eine waagrechte Stellung gefahren. Danach wird die Verformung in dieser Position gemessen. Wenn nun eine absolut arbeitende Winkelmesseinrichtung verwendet wird, kann der absolute Messwert direkt mit vorhergegangenen (ebenfalls absoluten) Messungen verglichen werden.

Weiterhin kann die Vorrichtung zur Erfassung von Verformungen an der Wurzel des Rotorblatts montiert sein, also in der Nähe des Rotorblattanschlusses an der Nabe der Windkraftanlage. Somit kann die zweite Bauteilgruppe im Bereich des Blattanschlusses an einer Nabe befestigt werden. Alternativ kann die Befestigungsstelle an einer Innenfläche der Nabe der betreffenden Windkraftanlage angeordnet werden.

In weiterer Ausgestaltung der Erfindung weist der Arm beziehungsweise das Material aus dem dieser hergestellt ist den gleichen Wärmeausdehnungskoeffizienten auf wie das Rotorblatt beziehungsweise dessen Material.

Mit Vorteil weist das Rotorblatt mehrere Vorrichtungen zur Erfassung von Verformungen auf. Durch die so erzeugten Signale der einzelnen Vorrichtungen kann nach der Verknüpfung beziehungsweise Verrechnung der jeweiligen Signale eine räumliche Verformung des Rotorblatts bestimmt werden.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

### KURZE BESCHREIBUNG DER ZEICHNUNGEN

- Figur 1: eine Seitenansicht einer Vorrichtung zur Erfassung von Verformungen eines Rotorblatts,
- Figur 2: eine perspektivische Ansicht der Vorrichtung zur Erfassung von Verformungen eines Rotorblatts,
- Figur 3: eine Schnittansicht der Vorrichtung zur Erfassung von Verformungen eines Rotorblatts,
- Figur 4: eine Rückansicht der Vorrichtung zur Erfassung von Verformungen eines Rotorblatts,
- Figur 5: eine schematische Ansicht eines Rotorblatts mit Vorrichtungen zur Erfassung von Verformungen.

### BESCHREIBUNG DER AUSFÜHRUNGSFORMEN

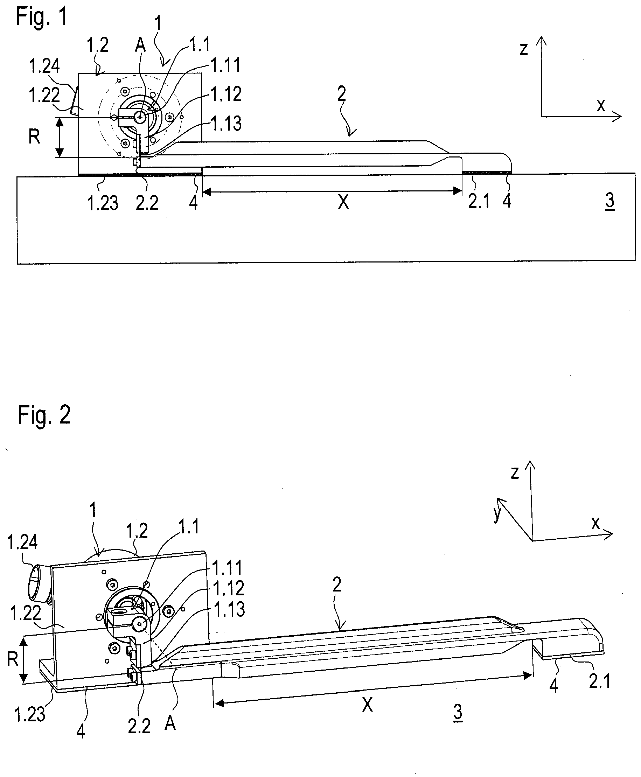

In den Figuren 1 und 2 ist eine Vorrichtung zur Erfassung von Verformungen eines Rotorblatts 3 einer Windkraftanlage gezeigt. Das entsprechende Rotorblatt 3 ist im vorgestellten Ausführungsbeispiel Bestandteil einer Windkraftanlage mit horizontaler Achse, die insbesondere insgesamt drei Rotorblätter 3 aufweist. Die betreffende Vorrichtung zur Erfassung von Verformungen des Rotorblatts 3 umfasst eine Winkelmesseinrichtung 1 und einen Arm 2.

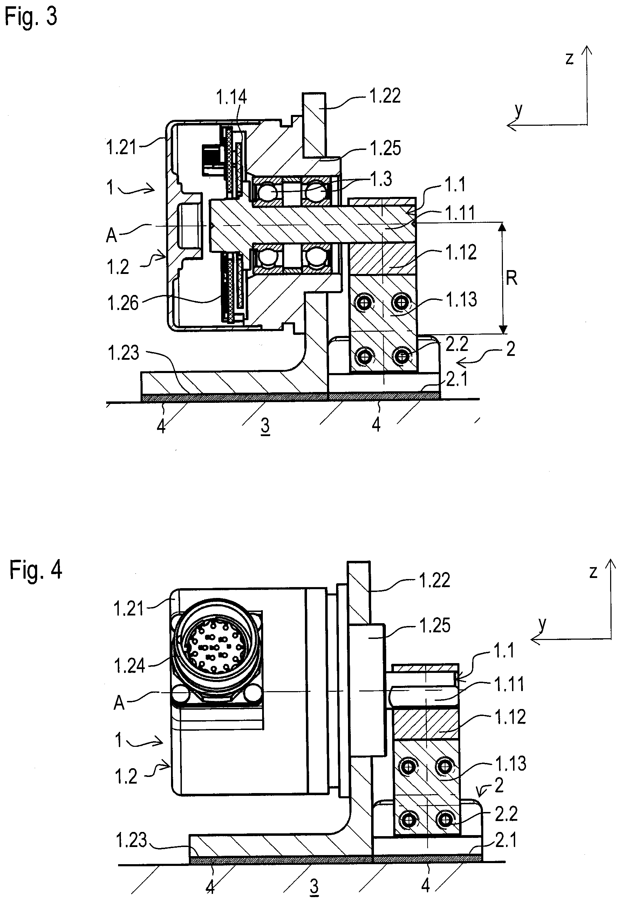

Die insbesondere in den Figuren 3 und 4 gezeigte Winkelmesseinrichtung 1 umfasst eine erste Bauteilgruppe 1.1 und eine zweite Bauteilgruppe 1.2. Die erste Bauteilgruppe 1.1 weist eine Welle 1.11 mit einem Absatz auf, an dem eine Maßverkörperung 1.14, z. B. durch eine Klebung, fest und nur mit geringen Toleranzabweichungen zentrisch bezüglich einer Achse A verbunden ist. Die Achse A erstreckt sich in y-Richtung. Die Maßverkörperung 1.14 besteht im vorgestellten Ausführungsbeispiel aus Glas und ist ringförmig ausgestaltet. Sie weist naturgemäß zwei Stirnflächen auf, wobei auf einer der Stirnflächen eine Winkelskalierung aufgebracht ist. Die Winkelskalierung kann beispielsweise als eine inkrementale Teilung mit radial orientierten Skalenstrichen ausgestaltet sein, wobei jedoch zusätzlich oder alternativ auch ein absoluter Code vorgesehen sein kann.

An der Welle 1.11 ist ein Mitnehmer 1.12 (siehe auch die Figuren 1 und 2) klemmend verdrehsicher befestigt, so dass bei Bewegung des Mitnehmers 1.12 eine Schwenkbewegung der Welle 1.11 erzeugt werden kann. Der Mitnehmer 1.12 kann der ersten Bauteilgruppe 1.1 zugeordnet werden und weist eine bearbeitete Fläche und Innengewinde auf, so dass ein Bauelement 1.13 daran präzise festgelegt werden kann. Das Bauelement 1.13 dient als Festkörpergelenk und ist entsprechend biegeweich ausgestaltet. Insbesondere kann das Bauelement 1.13 als ein dünnwandiges Stahlplättchen ausgestaltet sein.

Die Welle 1.11 ist gemäß der Figur 3 innerhalb eines Körpers 1.25, welcher der zweiten Bauteilgruppe 1.2 zuzuordnen ist, durch zwei Wälzlager 1.3 drehbar gelagert. Weiterhin der zweiten Bauteilgruppe 1.2 zuzuordnen ist eine in den Figuren nicht dargestellte Lichtquelle, die beispielsweise eine LED und eine Kollimatorlinse umfasst, so dass durch die Lichtquelle kollimiertes Licht emittiert wird. Dieses Licht tritt durch die Maßverkörperung 1.14 bzw. deren Winkelskalierung hindurch und wird entsprechend der Winkelstellung zwischen der ersten Bauteilgruppe 1.1 und der zweiten Bauteilgruppe 1.2 beziehungsweise der Welle 1.11 und dem Körper 1.25 moduliert.

Das modulierte Licht wird von einer Abtasteinrichtung 1.26, welche am Körper 1.25 befestigt ist, abgetastet. Entsprechende lichtempfindliche beziehungsweise photosensitive Detektoren befinden sich auf der als bestückte Leiterplatte ausgestalteten Abtasteinrichtung 1.26. Unter anderem umfasst die Abtasteinrichtung 1.26 auch elektronische Bauelemente zur Signalformung - beispielsweise zur Verstärkung und Digitalisierung - der von den Detektoren gelieferten Abtastsignale.

Um die Abtasteinrichtung 1.26 herum ist ein Gehäuse 1.21 montiert, so dass unter anderem die Lichtquelle, die Maßverkörperung 1.14 und die Abtasteinrichtung 1.26 gegenüber Umwelteinflüssen geschützt sind. Am Körper 1.25 ist ein Halter 1.22 befestigt. Dieser Halter 1.22 weist als Befestigungsstelle 1.23 eine Verbindungsfläche, hier eine Klebefläche, auf.

Über ein in den Figuren nicht gezeigtes Anschlusskabel, welches an einer Buchse 1.24 angeschlossen wird, wird eine elektrische Verbindung zwischen der Winkelmesseinrichtung 1 und einer Folgeelektronik hergestellt, so dass elektrische Signale und elektrische Energie zwischen der Folgeelektronik und der Winkelmesseinrichtung 1 übertragen werden können.

Durch die Winkelmesseinrichtung 1 kann also die relative Winkelstellung zwischen der ersten Bauteilgruppe 1.1 und der zweiten Bauteilgruppe 1.2 beziehungsweise zwischen der Welle 1.11 und dem Körper 1.25 bestimmt werden. Derartige Winkelmesseinrichtungen 1 werden auch häufig als Drehgeber bezeichnet.

Neben der Winkelmesseinrichtung 1 umfasst die Vorrichtung zur Erfassung von Verformungen den Arm 2. Dieser ist im vorgestellten Ausführungsbeispiel aus glasfaserverstärkten Kunststoff hergestellt und weist eine erste Verbindungsstelle 2.1 und eine zweite Verbindungsstelle 2.2 auf.

Die erste Verbindungsstelle 2.1 des Arms 2 ist als eine Fläche ausgestaltet, so dass diese mit dem Rotorblatt 3 verklebt werden kann. Das Rotorblatt 3 ist wie der Arm 2 aus glasfaserverstärkten Kunststoff hergestellt.

Die zweite Verbindungsstelle 2.2 ist im Ausführungsbeispiel eine Anschlagfläche, an die das Bauelement 1.13, beispielsweise durch Schraubverbindungen, montiert wird.

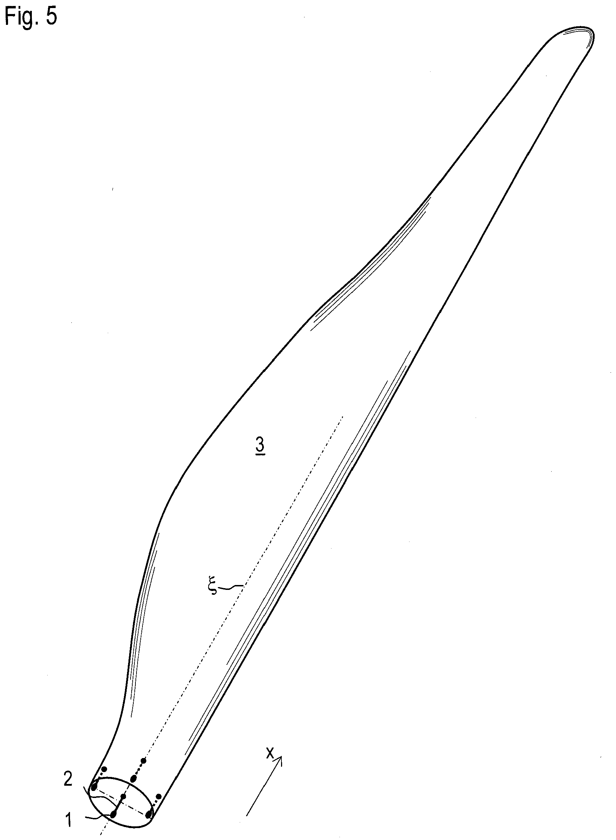

Im Zuge der Montage der Vorrichtung zur Erfassung von Verformungen eines Rotorblatts 3 einer Windkraftanlage wird nun im Bereich der Wurzel des Rotorblatts 3 die erste Verbindungsstelle 2.1 des Arms 2 sowie die Befestigungsstelle 1.23 des Halters 1.22 an die Innenseite der Wandung des Rotorblatts 3 geklebt. Die Spalte zwischen der Befestigungsstelle 1.23 beziehungsweise zwischen der Verbindungsstelle 2.1 und der Innenseite des Rotorblatts 3 sind demnach mit einem Kleber 4 ausgefüllt. Dadurch entstehen unverschiebbare Verbindungen zwischen dem Halter 1.22 und dem Rotorblatt 3 sowie zwischen dem Arm 2 und dem Rotorblatt 3. Der Arm 2 ist nach erfolgter Montage so orientiert, dass dieser in x-Richtung verläuft, wobei die x-Richtung im Wesentlichen der Längsachse ξ (Figur 5) des Rotorblatts 3 entspricht. Somit ist also die erste Verbindungsstelle in einem Abstand X zur Befestigungsstelle 1.23 der zweiten Bauteilgruppe 1.2 angeordnet, wobei der Abstand X orthogonal zur Achse A orientiert ist. Der Arm 2 ist bezogen auf die Achse A in radialem Abstand R mechanisch, insbesondere gelenkig, mit der Winkelmesseinrichtung 1 gekoppelt. Auf diese Weise kann durch eine Veränderung des Abstandes X, beispielsweise durch eine Dehnung oder durch eine Kontraktion des Rotorblatts 3 eine relative Schwenkbewegung zwischen der ersten und der zweiten Bauteilgruppe 1.1, 1.2 erzeugt werden.

Durch die Ausgestaltung des Bauelements 1.13 als ein dünnwandiges Stahlplättchen können Biegemomente in der Vorrichtung reduziert werden, ohne die Messgenauigkeit ungünstig zu beeinflussen. Das Bauelement 1.13 ist so dimensioniert, dass dessen Biegeweichheit mit dem erforderlichen Dreh- beziehungsweise Widerstandsmoment der Winkelmesseinrichtung abgestimmt ist.

Um eine Aussage über die Verformung des Rotorblatts 3 in allen Dimensionen treffen zu können ist es vorteilhaft, wenn mehrere , z.B. vier, derartige Vorrichtungen zur Erfassung von Verformungen in der Wurzel des Rotorblatts 3 montiert werden, wie in der Figur 5 dargestellt. Die vier Vorrichtungen zur Erfassung von Verformungen sind, vorzugsweise in den vier Hauptbiegerichtungen, über den Umfang der Wurzel eines Rotorblatts 3 jeweils um 90° versetzt angeordnet.

Im Betrieb der Windkraftanlage werden die Rotorblätter 3 durch ihr Eigengewicht und durch aerodynamische Lasten verformt. Insbesondere führen die Lasten zu Dehnungen oder Stauchungen des Rotorblatts 3 in x-Richtung. Entsprechend verändert sich der Abstand zwischen der Befestigungsstelle 1.23 des Halters 1.22 und der erste Verbindungsstelle 2.1 des Arms 2. Wenn der Abstand X etwa 500 mm beträgt, ändert sich der Abstand zwischen der Befestigungsstelle 1.23 des Halters 1.22 und der erste Verbindungsstelle 2.1 bei üblichen Belastungen um etwa 0,5 mm. Bei einer Dimensionierung von R mit etwa 30 mm führt dies zu einer Schwenkbewegung zwischen der ersten Bauteilgruppe 1.1 und der zweiten Bauteilgruppe 1.2 von etwa 1°. Die oben beschriebene Winkelmesseinrichtung 1, die nach einem präzisen optischen Prinzip arbeitet, hat beispielsweise eine Auflösung von 25 Bit für eine Umdrehung (360°), dies entspricht mit den genannten geometrischen Randbedingungen einer Auflösung von 5,6 nm bezogen auf die Längenänderungen des Abstands X zwischen der Befestigungsstelle 1.23 des Halters 1.22 und der ersten Verbindungsstelle 2.1 des Arms 2.

Die Vorrichtung zur Erfassung von Verformungen eines Rotorblatts 3 ist naturgemäß in einer Windkraftanlage großen Temperaturschwankungen ausgesetzt. Dennoch können durch die oben dargelegte Vorrichtung zur Erfassung von Verformungen überaus hohe Messgenauigkeiten auch unter diesen widrigen Umgebungsbedingungen erreicht werden. Dies liegt zum einen daran, dass durch die Erfassung von Winkellagen die thermische Ausdehnung der Maßverkörperung 1.14 kaum eine Rolle spielt (die Abstände zwischen den Skalierungsstrichen und deren Breite variieren mit der Temperatur, jedoch nicht die Winkellage). Zum anderen sind der Arm 2 und das Rotorblatt 3 aus dem gleichen Material hergestellt, so dass beide dasselbe thermische Ausdehnungsverhalten aufweisen. Schließlich kann durch das topfförmige elektrisch leitende Gehäuse 1.21 ein optimaler Schutz, insbesondere für die Abtasteinrichtung 1.26 und zugehöriger Elektronik, vor Überspannungen z. B. bei Gewittern gewährleistet werden.

Die über die Buchse 1.24 abgebbaren Signale sind vorteilhafterweise voll digital, so dass die oben genannte Folgeelektronik die Signale sämtlicher Vorrichtungen zur Erfassung von Verformungen der Rotorblätter ohne weitere Digitalisierung verarbeiten kann. Dies gewährleistet einerseits eine gegenüber äußeren Störungen sichere Signalübertragung, zum anderen können die Signale vergleichsweise einfach verarbeitet werden, so dass die gemessenen Verformungen in einem Regelkreis, z. B., zur (separaten) Regelung des Pitch-Winkels für jedes Rotorblatt 3 verwendet werden können.

## Patentansprüche

1. Vorrichtung zur Erfassung von Verformungen eines Rotorblatts (3) einer Windkraftanlage, umfassend
- eine Winkelmesseinrichtung (1), welche eine erste und eine zweite Bauteilgruppe (1.1, 1.2) aufweist, wobei
die erste Bauteilgruppe (1.1) relativ zur zweiten Bauteilgruppe (1.2) um eine Achse (A) schwenkbar angeordnet ist und durch die Winkelmesseinrichtung, die eine Maßverkörperung (1.14) und ein Element zur Abtastung (1.26) der Maßverkörperung (1.14) aufweist, die relative Winkellage zwischen der ersten und der zweiten Bauteilgruppe (1.1, 1.2) messbar ist, und wobei die zweite Bauteilgruppe (1.2) eine Befestigungsstelle (1.23) aufweist, die so ausgestaltet ist, dass diese mit dem Rotorblatt (3) verbindbar ist, und
- einen Arm (2), welcher eine Verbindungsstelle (2.1) aufweist, die derart ausgestaltet ist, dass der Arm (2) an dieser mit dem Rotorblatt (3) verbindbar ist, die Verbindungsstelle (2.1) in einem Abstand (X) zur Befestigungsstelle (1.23) der zweiten Bauteilgruppe (1.2) angeordnet ist, wobei der Abstand (X) orthogonal zur Achse (A) orientiert ist, und wobei der Arm (2) in radialem Abstand (R) mechanisch mit der ersten Bauteilgruppe (1.1) gekoppelt ist, so dass bei Veränderung des Abstands (X) eine relative Schwenkbewegung zwischen der ersten und der zweiten Bauteilgruppe (1.1, 1.2) erzeugbar ist.

2. Vorrichtung gemäß dem Anspruch 1, wobei der Arm (2) aus einem Material hergestellt ist, welches Kunststoff umfasst.

3. Vorrichtung gemäß dem Anspruch 2, wobei der Kunststoff faserverstärkt ist.

4. Vorrichtung gemäß einem der vorhergehenden Ansprüche, wobei die erste Bauteilgruppe (1.1) gelenkig mit dem Arm (2), insbesondere über ein biegeweiches Bauelement (1.13), verbunden ist.

5. Vorrichtung gemäß einem der vorhergehenden Ansprüche, wobei die Verbindungsstelle (2.1) als eine Klebefläche ausgestaltet ist.

6. Vorrichtung gemäß einem der vorhergehenden Ansprüche, wobei die Winkelmesseinrichtung ein Wälzlager (1.3) zur schwenkbaren Lagerung der ersten Bauteilgruppe (1.1) relativ zur zweiten Bauteilgruppe (1.2) aufweist.

7. Vorrichtung gemäß einem der vorhergehenden Ansprüche, wobei das Element (1.21) zur Abtastung der Maßverkörperung (1.11) photosensitiv ist.

8. Rotorblatt (3) einer Windkraftanlage mit einer Vorrichtung zur Erfassung von Verformungen gemäß dem Anspruch 1, wobei die Befestigungsstelle (1.23) mit dem Rotorblatt (3) verbunden ist und die Verbindungsstelle (2.1) mit dem Rotorblatt (3) verbunden ist.

9. Rotorblatt (3) gemäß dem Anspruch 8, wobei der Arm (2) in Längsrichtung (x) des Rotorblatts (3) orientiert ist.

10. Rotorblatt (3) gemäß dem Anspruch 8 oder 9, wobei die Befestigungsstelle (1.23) der zweiten Bauteilgruppe (1.2) mit der Innenseite des Rotorblattes (3) verbunden ist.

11. Rotorblatt (3) gemäß dem Anspruch 10, wobei der Arm (2) in Längsrichtung (x) des Rotorblatts (3) orientiert ist und die Achse (A) relativ zur Längsachse (ξ) des Rotorblatts (3) tangential oder radial ausgerichtet ist.

12. Rotorblatt (3) gemäß einem der Ansprüche 8 bis 11, wobei die Vorrichtung zur Erfassung von Verformungen an der Wurzel des Rotorblatts (3) montiert ist.

13. Rotorblatt (3) gemäß einem der Ansprüche 8 bis 12, wobei der Arm (2) den gleichen Wärmeausdehnungskoeffizienten aufweist wie das Rotorblatt (3).

14. Rotorblatt (3) gemäß einem der Ansprüche 8 bis 13, wobei das Rotorblatt (3) mehrere Vorrichtungen zur Erfassung von Verformungen aufweist.

## Claims

1. Device for detecting deformations of a rotor blade (3) of a wind turbine, comprising
- an angle measuring device (1), which has a first and second subassembly (1.1, 1.2), wherein
the first subassembly (1.1) is arranged such that it can be pivoted about an axis (A) relative to the second subassembly (1.2) and the relative angular position between the first and the second subassembly (1.1, 1.2) can be measured by means of the angle measuring device, which has a scale (1.14) and a scanning element for scanning (1.26) the scale (1.14), and wherein
the second subassembly (1.2) has a fixing point (1.23) which is configured such that it can be connected to the rotor blade (3), and
- an arm (2), which has a connecting point (2.1) which is configured in such a way that the arm (2) can be connected to the rotor blade (3) at the said connecting point (2.1), the connecting point (2.1) is arranged at a distance (X) from the fixing point (1.23) of the second subassembly (1.2), wherein the distance (X) is oriented orthogonally relative to the axis (A), and wherein
the arm (2) is coupled mechanically to the first subassembly (1.1) at a radial distance (R), so that when the distance (X) changes, a relative pivoting movement between the first and the second subassembly (1.1, 1.2) can be generated.

2. Device according to Claim 1, wherein the arm (2) is produced from a material which comprises plastic.

3. Device according to Claim 2, wherein the plastic is fibre-reinforced.

4. Device according to one of the preceding claims, wherein the first subassembly (1.1) is connected to the arm (2) in an articulated manner, in particular via a flexible component (1.13).

5. Device according to one of the preceding claims, wherein the connecting point (2.1) is configured as an adhesive surface.

6. Device according to one of the preceding claims, wherein the angle measuring device has a rolling-contact bearing (1.3) for the pivotable mounting of the first subassembly (1.1) relative to the second subassembly (1.2).

7. Device according to one of the preceding claims, wherein the element (1.21) for scanning the scale (1.11) is photosensitive.

8. Rotor blade (3) of a wind turbine having a device for detecting deformations according to Claim 1, wherein the fixing point (1.23) is connected to the rotor blade (3) and the connecting point (2.1) is connected to the rotor blade (3).

9. Rotor blade (3) according to Claim 8, wherein the arm (2) is oriented in the longitudinal direction (x) of the rotor blade (3).

10. Rotor blade (3) according to Claim 8 or 9, wherein the fixing point (1.23) of the second subassembly (1.2) is connected to the inner side of the rotor blade (3).

11. Rotor blade (3) according to Claim 10, wherein the arm (2) is oriented in the longitudinal direction (x) of the rotor blade (3), and the axis (A) is aligned tangentially or radially relative to the longitudinal axis (ξ) Of the rotor blade (3).

12. Rotor blade (3) according to one of Claims 8 to 11, wherein the device for detecting deformations is mounted on the root of the rotor blade (3).

13. Rotor blade (3) according to one of Claims 8 to 12, wherein the arm (2) has the same coefficient of thermal expansion as the rotor blade (3).

14. Rotor blade (3) according to one of Claims 8 to 13, wherein the rotor blade (3) has a plurality of devices for detecting deformations.

## Revendications

1. Dispositif pour détecter des déformations d'une pale de rotor (3) d'une éolienne, comprenant :
- un dispositif de mesure d'angle (1) qui présente un premier et un deuxième groupe de composants (1.1, 1.2),
le premier groupe de composants (1.1) étant disposé de manière à pouvoir pivoter autour d'un axe (A) par rapport au deuxième groupe de composants (1.2) et le dispositif de mesure d'angle, qui présente une échelle (1.14) et un élément de balayage (1.26) de l'échelle (1.14), permettant de mesurer la position angulaire relative entre le premier et le deuxième groupe de composants (1.1, 1.2) et
le deuxième groupe de composants (1.2) présentant une zone de fixation (1.23) qui est configurée de telle sorte qu'elle puisse être raccordée à la pale de rotor (3), et
- un bras (2) qui présente une zone de connexion (2.1) qui est configurée de telle sorte que le bras (2) puisse être raccordé au niveau de celle-ci à la pale de rotor (3), la zone de connexion (2.1) étant disposée à une distance (X) de la zone de fixation (1.23) du deuxième groupe de composants (1.2), la distance (X) étant orientée perpendiculairement à l'axe (A), et
le bras (2) étant accouplé mécaniquement à une distance radiale (R) au premier groupe de composants (1.1), de telle sorte qu'en cas de variation de la distance (X), un mouvement de pivotement relatif entre le premier et le deuxième groupe de composants (1.1, 1.2) puisse être produit.

2. Dispositif selon la revendication 1, dans lequel le bras (2) est fabriqué à partir d'un matériau qui comprend du plastique.

3. Dispositif selon la revendication 2, dans lequel le plastique est renforcé par des fibres.

4. Dispositif selon l'une quelconque des revendications précédentes, dans lequel le premier groupe de composants (1.1) est raccordé de manière articulée au bras (2), en particulier par le biais d'un élément structurel souple flexible (1.13).

5. Dispositif selon l'une quelconque des revendications précédentes, dans lequel la zone de connexion (2.1) est configurée sous forme de surface adhésive.

6. Dispositif selon l'une quelconque des revendications précédentes, dans lequel le dispositif de mesure angulaire présente un palier à roulement (1.3) pour le support sur palier pivotant du premier groupe de composants (1.1) par rapport au deuxième groupe de composants (1.2).

7. Dispositif selon l'une quelconque des revendications précédentes, dans lequel l'élément (1.21) pour balayer l'échelle (1.11) est photosensible.

8. Pale de rotor (3) d'une éolienne comprenant un dispositif pour détecter des déformations selon la revendication 1, la zone de fixation (1.23) étant raccordée à la pale de rotor (3) et la zone de connexion (2.1) étant raccordée à la pale de rotor (3) .

9. Pale de rotor (3) selon la revendication 8, dans laquelle le bras (2) est orienté dans la direction longitudinale (x) de la pale de rotor (3).

10. Pale de rotor (3) selon la revendication 8 ou 9, dans laquelle la zone de fixation (1.23) du deuxième groupe de composants (1.2) est raccordée au côté intérieur de la pale de rotor (3).

11. Pale de rotor (3) selon la revendication 10, dans laquelle le bras (2) est orienté dans la direction longitudinale (x) de la pale de rotor (3) et l'axe (A) est orienté tangentiellement ou radialement par rapport à l'axe longitudinal (ξ) de la pale de rotor (3).

12. Pale de rotor (3) selon l'une quelconque des revendications 8 à 11, dans laquelle le dispositif pour détecter des déformations est monté sur l'emplanture de la pale de rotor (3).

13. Pale de rotor (3) selon l'une quelconque des revendications 8 à 12, dans laquelle le bras (2) présente le même coefficient de dilatation thermique que la pale de rotor (3).

14. Pale de rotor (3) selon l'une quelconque des revendications 8 à 13, dans laquelle la pale de rotor (3) présente plusieurs dispositifs pour détecter des déformations.
